# EUROPEAN PATENT APPLICATION

(11) **EP 3 657 752 A1**
(43) Date of publication of application: **27.05.2020**
(21) Application number: 18306564.8
(22) Date of filing: 23.11.2018
(51) Int. Cl.: H04L 29/06, H04W 12/06, H04W 88/16, H04W 4/08

(54) **A METHOD AND APPARATUSES FOR AUTHENTICATING A GROUP OF WIRELESS COMMUNICATION DEVICES**

(71) Applicant: Thales Dis France SA, 92190 Meudon (FR)
(72) Inventor: PHAN, Ly Thanh, 92190 MEUDON (FR)
(74) Representative: Cassagne, Philippe M.J.

(57) **Abstract**

The invention relates to a gateway relaying node (201) for the authentication a group (200) comprising a plurality of wireless communication devices localized in the vicinity of said node (201) and requesting access to a wireless communication network (130), the gateway relaying node (201) being adapted to communicate directly with the requesting wireless communication devices and with the wireless communication network, the gateway relaying node (201) being further adapted to receive (214, 215) all or part of a synthetic authentication vector (300) generated by an authentication server (203); generate (216) a local AUTHENTICATE command for each of the requesting wireless communication devices (200), a local AUTHENTICATE command being composed of the random number RAND and of the bits extracted from the synthetic authentication vector and corresponding to the sampled version of individual authentication vectors corresponding to the requesting wireless communication devices (200) for which the local AUTHENTICATE command is intended; transmitting the local AUTHENTICATE commands (217a, 217b, 217c) to each of the requesting wireless communication devices (200).

## Description

### TECHNICAL FIELD

The present invention relates to a method and apparatuses to authenticate a group of wireless communication devices. It is applicable to wireless communication systems and to the Internet of Things.

### BACKGROUND OF THE INVENTION

According to the Recommendation ITU-T Y.2060 provided by the International Telecommunication institute, the Internet of things (IoT) is defined as a global infrastructure for the information society, enabling advanced services by interconnecting physical and virtual things based on existing and evolving interoperable information and communication technologies. A thing is an object of the physical world (physical things) or the information world (virtual things), which is capable of being identified and integrated into communication networks. At present, IoT is generally applied in fields such as security surveillance, automatic vending machines, public traffic systems, vehicle monitoring and management, industry process automatization, motor machineries, city informationalization.

In next generation wireless communication networks massive deployments of so called loT devices are one of the key business drivers for the telecom operators.

In this description, an loT device is referred as a wireless communication device WCD. A wireless communication device WCD is a piece of equipment with communication capabilities and optionally capacity of data capture, sensing, data storage and/or data processing. A wireless communication device WCD comprises for example a wireless communication module also called Machine Type Communication (MTC) module allowing transmission of data from one wireless communication device WCD device to a network or exchange of data between machines through UMTS/HSDPA, CDMA/EVDO, LTE, 5G, LoRa or other networks.

One of the problem raised by the massive deployment of wireless communication devices WCDs is the radio resources needed for authentication. Authenticating each of the wireless communication devices WCDs individually generally involves a large bandwidth consumption in the wireless communication network. Further, long distance wireless communications for enabling this initial authentication also involves significant energy needs with a strong impact on the device battery consumption. As a consequence, this constitutes a material overhead relative to the value of such type of device.

Therefore, it would be advantageous to have an improved method, system and apparatus allowing the registration of a plurality of wireless communication devices and subscribers while minimizing the needed signaling messages.

Several technologies belonging to the state of the art aims at addressing this problem.

According to a first existing technology, each message that is transmitted to the network by a wireless communication device WCD is authenticated individually. This solution is implemented by SigFox and LoRa Low Power and Wide Area Networks (LPWANs). A significant drawback is that an intrinsic overhead is introduced in each message and another drawback resides in the way keys are distributed for enabling this authentication method.

According to a second existing technology, group authentication can be carried out by a gateway device capable of authenticating individually the wireless communication devices WCD under its coverage. In that case, the wireless network delegates the authentication trust to that gateway device for performing the authentication as well as for keeping the secret secure and distributing the network resources to the local devices. The wireless network cannot be sure however that the gateway has correctly performed the authentications of the devices nor kept secrets the devices keys.

### SUMMARY OF THE INVENTION

The invention relates to a gateway relaying node for the authentication a group comprising a plurality of wireless communication devices localized in the vicinity of said node and requesting access to a wireless communication network, the gateway relaying node being adapted to communicate directly with the requesting wireless communication devices and with the wireless communication network, the gateway relaying node being further adapted to:
- receive all or part of a synthetic authentication vector generated by an authentication server, the synthetic authentication vector being derived from a set of individual authentication vectors, said set comprising one individual authentication vector per requesting wireless communication device belonging to the group, an individual authentication vector being determined using a random number RAND generated for registering the whole group of requesting wireless communication devices, the synthetic authentication vector being derived by sampling each individual authentication vector using a sampling function SFm and by concatenating the sampled version of said individual authentication vector, the sampling function SFm being selected depending on the value of the random number RAND, the random number RAND being also transmitted as a part of the synthetic authentication vector;
- generate a local AUTHENTICATE command for each of the requesting wireless communication devices, a local AUTHENTICATE command being composed of the random number RAND and of the bits extracted from the synthetic authentication vector and corresponding to the sampled version of the individual authentication vectors corresponding to the requesting wireless communication devices for which the local AUTHENTICATE command is intended;
- transmitting the local AUTHENTICATE commands to each of the requesting wireless communication devices.

According to an example, the gateway relaying node is adapted, before receiving the synthetic authentication vector, to:
- receive a registration request for each of the requesting wireless communication device of the group, a registration request comprising an identifier associated to the requesting wireless communication device to which it is associated;
- transmit to the authentication server the received identifiers, said identifiers being used by the authentication server to retrieve a secret associated to the requesting wireless communication devices of the group, said secret being used as an input to determine the individual authentication vectors.

According to an example, the gateway relaying node is adapted, after having transmitted the local AUTHENTICATION commands, to:
- receive for each requesting wireless communication device of the group an authentication response comprising a result RES_i determined using a secret accessible from the requesting wireless communication device and from the random number;
- generate a synthetic authentication response RES* by concatenating a sampled version of the results RES_i received from each of the requesting wireless communication devices of the group.

According to an example, the gateway relaying node is of same type as of the requesting wireless communication devices.

According to an example, the identifiers associated to the requested wireless devices are International Mobile Subscriber Identifiers IMSI.

According to an example, the list of IMSI is by transmitting only the MSIN part in case the MCC and MNC fields are the same for the requesting wireless communication devices of the group.

The invention also relates to an authentication server adapted to:
- receive a message comprising a list of identifier associated to a group of wireless communication device, the requesting wireless communication device of this group requesting access to a wireless communication network, each of the requesting wireless communication device being associated to an identifier of the list;
- provide a random number RAND generated for this access request for the whole group;
- generate a set of individual authentication vectors, said set comprising one individual authentication per requesting wireless communication device belonging to the group, an individual authentication vector being determined using the random number RAND;
- select a sampling function SFm based on the random number RAND
- generate a synthetic authentication vector by sampling each individual authentication vector using the sampling function SFm and by concatenating the sampled version of said individual authentication vector, the random number RAND being also transmitted as a part of the synthetic authentication vector;
- transmit all or part of the synthetic authentication vector to a gateway relaying node as claimed in claim 1.

According to an example, the authentication server is configured to estimate a level of confidence for each of the requesting wireless communication devices of the group taking into account the increasing number of authentications performed over time for each of them.

According to an example, an individual authentication vector provided for the i-th requesting wireless communication device comprises an authentication token AUTN_i for authenticating the wireless communication network, a sequence number SQN_i and an expected result XRES_i.

According to an example, the synthetic authentication vector is generated by extracting for the i-th requesting wireless communication device at least one bit of AUTN_i, at least one bit of XRES_i and at least one bit of SQN_i for respectively forming AUTN_i**, XRES_i** and SQN_i**, then concatenating the AUTN_i**, XRES_i**, SQN_i** obtained for all the requesting wireless communication devices of the group, then by calculating a hashed value of XRES_i** and adding the random number RAND.

According to an example, the at least one bit extracted from SQN_i to form SQN_i** is the at least one near least significant bits of SQN_i, for allowing the i-th requesting wireless communication device to verify SQN_i while receiving only SQN_i** with the assumption that the most significant bits are correct despite not received.

According to an example, K bits are extracted from XRES_i*, this extraction being done for all the requesting wireless communication devices of the group and concatenated in order to from a control code named GRN_ControlCodes.

According to an example, the control code GRN_ControlCodes is transmitted to the gateway relaying node for enabling it to perform a pre-authentication of the requesting wireless communication devices.

According to an example, the synthetic authentication vector is transmitted entirely to an Access and Mobility management Function AMF, which memorizes HXRES* and forwards a part of the synthetic authentication vector to the gateway relay node, said part comprising AUTN*, SQN* and RAND.

### BRIEF DESCRIPTION OF THE DRAWINGS

Additional features and advantages of the invention will be more clearly understandable after reading a detailed description of several embodiments of the invention, given as indicative and non-limitative examples, in conjunction with the following drawings:
- Figure 1 provides an example of wireless telecommunication system implementing a mechanism to optimize the authentication of groups of wireless communication devices;
- Figure 2 is a sequence diagram illustrating a mechanism for optimizing the registration of a plurality of wireless communication devices by a 5G network;
- Figure 3 provides an example of mechanism allowing the generation of a synthetic authentication vector to be used for a plurality of N requesting wireless communication devices;
- Figure 4 provides an example showing how an AUTHENTICATE command comprising a synthetic authentication vector can be generated and transmitted by the authentication server;
- Figure 5 is a flowchart providing an example of the processing performed by a given requesting wireless communication device upon reception of a local AUTHENTICATE command;
- Figure 6 is a flowchart providing an example of processing performed by a gateway relaying node GRN;
- Figure 7 is a flowchart providing an example of processing performed by an Access and Mobility management Function AMF server;
- Figure 8 is a flowchart providing an example of processing performed by the home authentication server AUSF.

### DETAILED DESCRIPTION

The invention relates to a probabilistic mechanism allowing to reduce the number of long distance authentications by individual wireless communication devices.

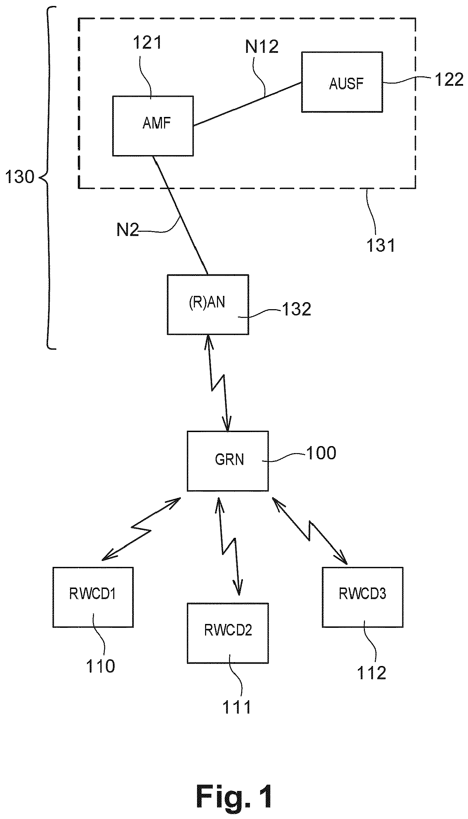

**Figure 1** provides an example of wireless telecommunication system implementing a mechanism to optimize the authentication of groups of wireless communication devices.

According to this simplified example, three wireless communication devices 110-112 are requesting access to a wireless communication network 130. For simplification purposes, the wireless communication network is designated as the "network" in the sequel.

The wireless communication devices need to be authenticated by the network. For that purpose, a local gateway called Gateway-Relaying Node GRN 100 is used for aggregating signalling messages exchanged between the wireless communication devices 110-112 and the network 130 during the registration process. In the context of this invention, the word registration refers to a mutual authentication performed by the network and a wireless communication device and possibly other tasks such as maintaining a database by the network of correctly authenticated wireless communication devices.

The Gateway-Relaying Node 100 can be implemented as a server with wireless communication capabilities for communicating both with the wireless communication devices 110-112 in its vicinity as well as with the network 130. According to another embodiment, the Gateway-Relaying Node 100 can be a wireless communication device of the same type than those 110-112 requesting to be registered by the network, by a WIFI hotspot, by a Home (e)NodeB also known as a femtocell,a smallcell, a picocell, or embedded in a base station (gNB, eNB).

In this example, the wireless communication network 130 is a simplified representation of a 5G wireless telecommunication systems as described in the 3GPP technical specification TS 23.501, version 15.0.0. The skilled person would nevertheless understand that the described invention can also be applied to other types of wireless telecommunication systems, for example evolutions of existing 4G systems or LPWANs. Further, the skilled person will also appreciate that the invention can also be applied for wireless communication devices beyond loT use cases. For example, the invention is also applicable to wireless communication devices such as smartphones, tablets or even laptop computers.

The network 130 comprises a 5G Access Network 132, that is to say an access network comprising a NG-RAN and/or non-3GPP Access Network connecting to a 5G Core Network.

A core network 131 is also part of the wireless communication network 130 and is represented is also comprises a core network which is there represented in a simplified way as it only comprises an Access and Mobility management Function AMF 121 and a Authentication Server Function AUSF 122. N2 refers to the reference point between the (R)AN 132 and the AMF 121 and N12 refers to the reference point between AMF 121 and the AUSF 122.

According to one aspect of the invention, authentication vectors are generated by the authentication server AUSF 122 for a plurality of wireless communication devices 110-112 localized in the vicinity of the local gateway 100.

These authentication vectors are sampled and then aggregated into a so-called synthetic authentication vector (SAV) transmitted by the authentication server 122 to the Gateway-Relaying Node 100 through the AMF 121.

The Gateway-Relaying Node 100 is configured to generate locally authentication vectors for each individual wireless communication device 110-112 using the synthetic authentication vector (SAV).

The requesting wireless communication devices 110-112 are adapted to check the validity of an authentication challenge received from the network, but only on a sample of the AUTN token generated for them. It is further adapted to send response messages to the local gateway 100.

The Gateway-Relaying Node 100 is also adapted to generate a synthetic authentication response message based on the local device authentication responses received from the requesting communication devices 110-112.

The authentication server AUSF 122 then considers the requesting wireless communication devices as authenticated based on the synthetic authentication response received from the local Gateway Relaying Node 100.

The authentication server AUSF 122 can estimate a level of confidence for each of the requesting wireless communication devices taking into account the increasing number of authentications performed over time for each of them. Indeed, this level of confidence increases with successive successful authentications of the same group of devices.

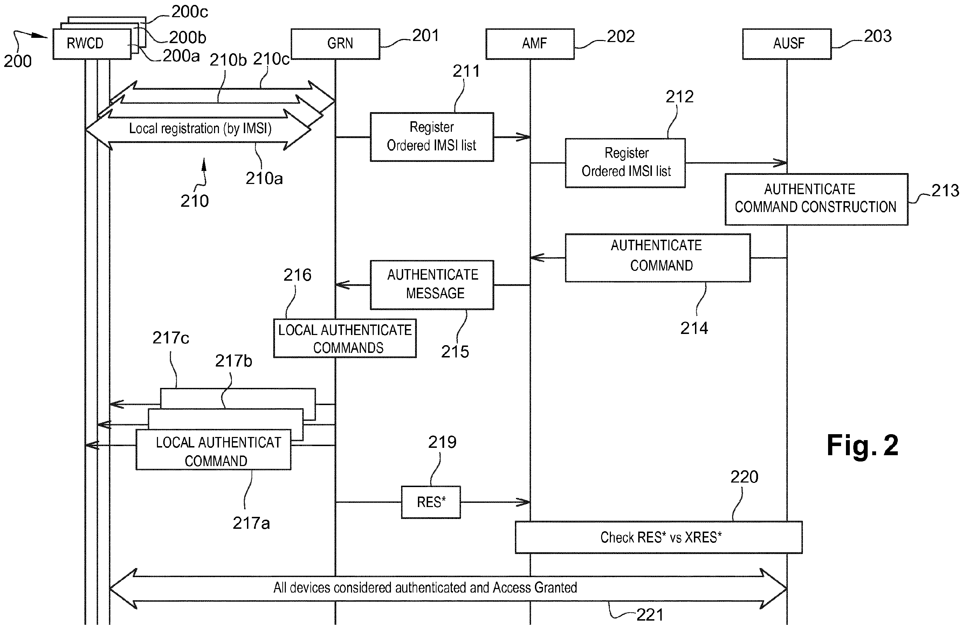

**Figure 2** is a sequence diagram illustrating a mechanism for optimizing the registration of a plurality of wireless communication devices by a 5G network.

The described mechanism is based on the use of a Gateway-Relaying Node 201 capable of concentrating multiple registration requests from a plurality of requesting wireless communication devices 200. According to this example, the registration is performed for three requesting wireless communication devices 200a, 200b, 200c.

According to an aspect of the invention, the wireless communication devices are capable of local communications, for example device to device communications using wireless technologies such as WiFi or BlueTooth.

Additionally, the wireless communication devices have capabilities of registering to a long range radio network, for example 2G, 3G, 4G or 5G networks. According to an example, they can use for instance an IMSI/Ki pair securely stored preferably in a tamper resistant secure environment such as an embedded eUICC, a secure element or a secure enclave.

One or more of such wireless communication devices is capable of communication with the long range radio network. This wireless communication device act as the Gateway-Relaying Node (GRN). However, the invention is also application to a Gateway-Relaying Node (GRN) that is implemented as a server comprising wireless capabilities.

Another actor in this sequence diagram is a serving AMF 202 which is capable of performing on behalf of a home AUSF 203 authentication of the requesting wireless communication devices 200.

The home AUSF 203 is capable of generating a set of N+1 authentication vectors for the N+1 requesting wireless communication devices 200.

The authentication procedures described thanks to this sequence diagram is an improvement of the well-known Authentication and Key Agreement (AKA) protocol. Notations that are used in the following description are referring to notions that are well known to those skilled in the art. For additional information, one can refer for example to the 3GPP specification TS 33.501 describing AKA for 5G, version 15.2.0, section 6.1.3.2 can be carried out.

Therefore, the following notations are used in the sequel:
XRES refers to an expected response;
HRES refers to a hash expected response;
AUTN refers to an authentication token;
SQN refers to a sequence number.

At first, the requesting wireless communication devices 200 discover the GRN 201 and establish individual, that is to say one-to-one, or a group local communication with the GRN 201.

Then, each of the requesting wireless communication devices 200 sends a local registration message 210a, 210b, 210c to the GRN 201 comprising a subscriber identifier. This subscriber identifiers can be for example an International Mobile Subscriber Identifier (IMSI).

The GRN 201 then registers to the AMF 202 through a radio access network, for example a LTE or 5G radio access network (RAN). For that purpose, a registration message 211 comprising an ordered list of IMSIs is transmitted to the serving AMF 202. According to an embodiment, the registration message 211 also comprises the GRN's IMSI.

According to an example, the ordered list of IMSIs can be compressed. This compression can be enabled for example by transmitting only the Mobile Subscriber Identification Number (MSIN) part of the IMSI in case the Mobile Country Code (MCC) and the Mobile Network Code (MNC) fields are the same for these requesting wireless communication devices 200. The skilled person can also consider other methods belonging to the prior art and allowing to compress this ordered list of IMSI. Further, the ordered list of IMSI can also be encrypted with the Home network operator public key for privacy purposes.

The AMF 202 then forwards 212 the registration message content to the AUSF 203 of the home PLMN. For that purpose, it can use the clear text part of the registration message containing the Home Public Land Mobile Network (PLMN) Identity and Routing Information.

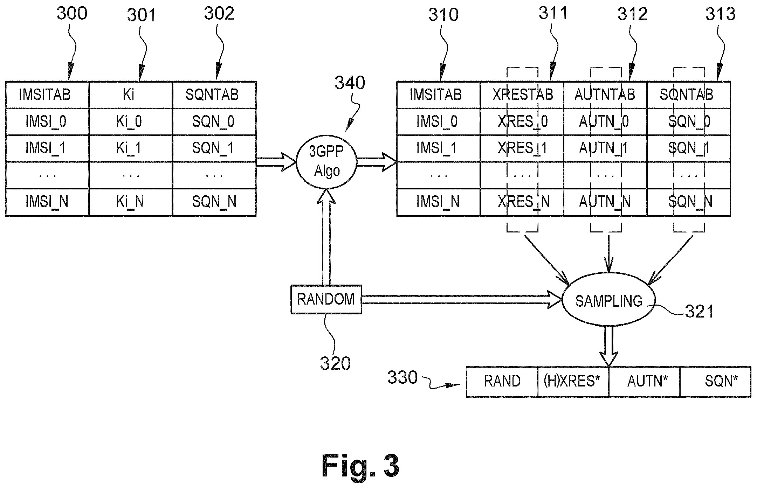

**Figure 3** provides an example of mechanism allowing the generation of a synthetic authentication vector to be used for a plurality of N requesting wireless communication devices.

After having received the ordered IMSI list 212, the authentication server AUSF 203 generates 213 a synthetic authentication vector that will be used for authenticating the whole set 200 of requesting wireless communication devices.

For that purpose, the authentication server 203:
- decrypts the encrypted ordered list of IMSIs;
- decompresses the ordered list of IMSIs;
- finds the Ki keys 301 and sequence numbers 302 for each IMSI in the ordered list of IMSIs 300;
- generates one single random Challenge (RAND).

For the N+1 requesting wireless communication devices respectively associated to the N+1 IMSI 310, the authentication server AUSF 203 generates an eXpected Results table XRESTAB 311 and AUTN cryptogram table AUTNTAB 312 for the challenge RAND 320 and for the Ki Key and Sequence number SQN associated to each IMSI of the ordered list of IMSIs. It is to be noted that in the example illustrated with Figure 2, N is taken as equal to two. It is to be understood that this is for exemplary purpose only and that N can be chosen equal to any integer greater or equal to zero.
XRESTAB = [XRES_0, XRES_1, ..., XRES_N]
AUTNTAB = [AUTN_0, AUTN_1, ..., AUTN_N]

The expected result XRES_i and the authentication token AUTN_i for the i-th requesting wireless communication device are determined using well-known algorithms 340 noted Authentication-Algo(), for example the ones described in 3GPP TS 33.501.

This can be expressed as follow:
XRES_i, AUTN_i = Authentication-Algo(KI_i, RAND, SQN_i)

Then, the synthetic authentication vector can be determined.

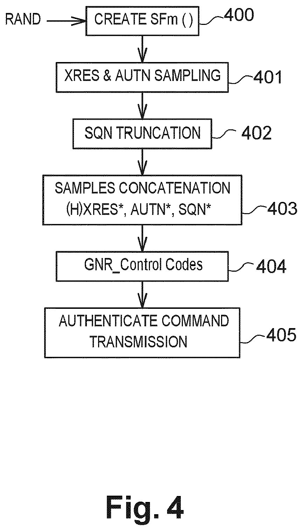

**Figure 4** provides an example showing how an AUTHENTICATE command comprising a synthetic authentication vector can be generated and transmitted by the authentication server.

The generation 213 of the AUTHENTICATE command can be implemented using steps 400-405.

At first, a Sampling Function SFm is generated 400 using the random number RAND as an input parameter.

The principle to be followed for choosing a given sampling function SFm is that there should be preferably a unique function for each possible RAND value. A given SFm function will extract for the i-th requesting wireless communication device a sample of the bits composing XRES_i and a sample of the bits composing AUTN_i.

For example, the sampling function SFm can be used 401 to respectively extract P and Q bits of XRES_i of the XRESTAB table 311 and of AUTN_i of the AUTNTAB table 312, for all i.

For instance, for a given RAND value 320, the SFm function, can choose bit-2 to bit-6 of each of the XRES_i of XRESTAB 311 and bit-8 to bit-10 of each of the AUTN_i of AUTNTAB 312.

According to an example, the AUSF 203 server further extract a number S of the near least significant bits of the sequence numbers SQN_i of the SQNTAB table 313. This can be for example the four near least significant bits of each SQN_i. For instance if the validity window is 32 and bit 1 is the least significant bit, then one could choose to use bit 5 to bit 8 for SQN_i, as lesser significant bits to bit 5 would be a priori within the validity window and would not provide useful information.

Then, the samples obtained from the XRES_i, AUTN_i and SQN_i values provided for the N+1 requesting communication devices are respectively concatenated 403 to form XRES*, AUTN* and SQN*.

A synthetic authentication vector 330 can then be constructed. This synthetic authentication vector comprises preferably RAND, HXRES*, AUTN* and SQN*, whereas HXRES* is a hashed value of XRES*.

According to an example, the sampling step 321 can further extract 404 K bits from the sampled bits of the expected Results table. This can be part of the SFm function or defined in another function SFm' applied in parallel with SFm.

These K bits can be for example bit-3 and bit-4 of the already extracted bits from AUTN_i and XRES_i to form N+1 codes of four bits each which are then concatenated to form a control code named GRN_ControlCodes. This control code can then be used by the GRN to perform a pre-authentication of the requesting wireless communication devices as detailed later in this description.

Then, an AUTHENTICATE command comprising the synthetic authentication vector 330, the GRN IMSI and possibly GRN_ControlCodes can be constructed and transmitted 214, 405 to the serving AMF 202.

Note that in this example, the synthetic authentication vector is entirely transmitted to the serving AMF 202, and then, as this is described below, a part of the synthetic authentication vector is transmitted to the Gateway-Relaying Node. Indeed, the AMF 202 memorizes the sampled expected results HXRES* and transmit AUTN*, SQN* and RAND to the Gateway-Relaying Node (201). This is because in this embodiment the AMF is responsible of comparing HXRES* with hashed value of RES* generated by the GRN thanks to the feedback messages provided by the requesting wireless communication devices of the group. However, those skilled in the art will appreciate that other embodiments, even if not detailed in this specification, can be considered in the context of this invention. For example, the synthetic authentication vector can be entirely transmitted by the serving AMF 202 to the GRN 201 and the GRN 201 can be in that case responsible for comparing the hashed value of RES* with HXRES*.

The serving AMF 202 then receives the AUTHENTICATE command 214 from the home AUSF 203. Then, the serving AMF 202 can be configured to store HXRES* and the IMSI of the GRN 201. The serving AMF 202 can be further configured to forward the RAND, SQN*, AUTN* and optionally GRN_ ControlCodes in an AUTHENTICATE message 215 to the GRN 201.

The GRN 201 upon reception of the AUTHENTICATE command can be configured to store RAND and GRN_ControlCodes. It can be also configured to generate 216 N+1 Local AUTHENTICATE Command (LAC).

According to an example, a Local AUTHENTICATE Command for the i-th requesting wireless communication device comprises:
- the random number RAND, which is common for all the N+1 requesting wireless communication devices 200;
- the bits corresponding to the one extracted on SQN_i for the i-th wireless communication device by the AUSF server 203 using the SFm function and noted SQN_i**;
- the bits corresponding to the one extracted on AUTN_i for the i-th wireless communication device by the AUSF server 203 using the SFm function and noted AUTN_i**.

Said differently, SQN_i** and AUTN_i** are the bits of SQN* and AUTHN* that are associated to the i-th requesting wireless communication device.

The N+1 Local AUTHENTICATE Commands 217a, 217b, 217c are then transmitted by the GRN 201 to each of the requesting wireless communication device 200a, 200b, 200c, a given local AUTHENTICATE command being associated to the IMSI a given requesting wireless communication device.

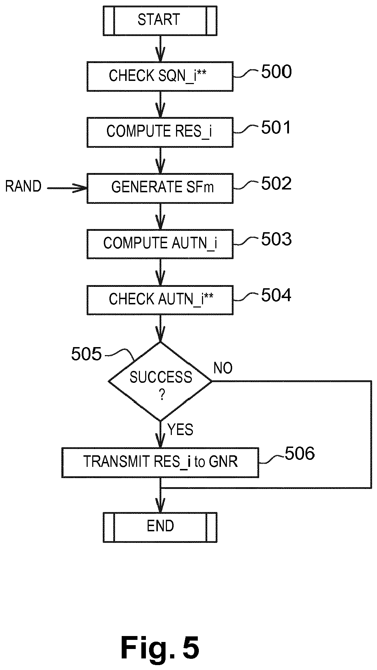

**Figure 5** is a flowchart providing an example of the processing performed by a given requesting wireless communication device upon reception of a local AUTHENTICATE command.

Upon reception of the Local AUTHENTICATE Command, each of the requesting wireless communication devices 200a, 200b, 200c is configured to:
- check 500 that the SQN_i** bits corresponding to the near least significant bits of expected SQN value are within a validity window, as this the case in AKA prior art protocols, but the i-th requesting wireless communication device assumes that the higher significant bits and lesser significant bits which are not received in SQN_i** are correct;
- compute 501 a result RES_i based on its own secret key Ki, the received RAND and a reconstructed version of the SQN number, this reconstructed version being generated by taking SQN_i** bits as the near least significant bits and the higher significant bits from the SQN counter maintained internally by the i-th requesting wireless communication device or embedded in an authentication token installed in said device, and assuming the lesser significant bits are set to a default value e.g. lesser significant bits are zeros;
- generate 502 the sampling function SFm using the received RAND in the same manner than the AUSF 203 generated it;
- compute 503 AUTN_i and apply the SFm function to extract a set of bits for verifying 504 AUTN_i** bits;
- if successful 505, the device transmits 506 the computed RES_i value to the GRN 201.

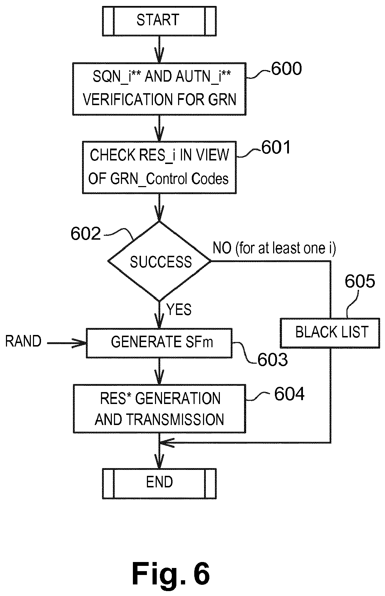

**Figure 6** is a flowchart providing an example of processing performed by a gateway relaying node.

The GRN 202 can perform 600 the same type verification and computation for the SQN_i** and AUTN_i** bits corresponding to its IMSI.

Then, upon reception of the RES_i value from the i-th requesting wireless communication device, the following steps can be carried out:
- verify 601 that the bits of the received RES_i sampled using SFm' are equal to the corresponding bits of GRN_ ControlCodes;
- if successful 602, the GRN assumes that the requesting wireless communication device is valid. In that case,
- the GRN server stores RES_i;
- generate 603 the sampling function SFm based on the RAND value;
- once, all the RES_i of all N+1 requesting wireless communication devices are received and verified, the GRN 201 extracts 604 from the ordered list of the received RES_i, which can be ordered as the initially ordered list of IMSIs, the bits to form RES* using SFm and send it 219, to the serving AMF 202.

If the verification 602 of the sampled bits of the received RES_i are not equal to the corresponding bits of GRN_ ControlCodes for at least one of the N+1 requesting wireless communication devices, an incorrect RES_i value is detected. In that case, the failing wireless communication device can be black listed 605. A new registration attempt can then be carried out, but only with the successfully checked devices. This means that a new ordered IMSI without the IMSI used by the failing wireless communication device is transmitted by the GRN to the AMF for relaunching the registration process for this new group of requesting wireless communication devices.

It is to be noted that the GRN_ControlCodes element is optional, and has the advantage of allowing the GRN 201 to determine locally which devices would fail the authentication procedure prior to sending the authentication response to the AMF and AUSF servers. This also allows the GRN 201 to re-initiate a new authentication procedure with only those devices that were successfully locally verified.

The GRN can perform a new registration attempt with failed devices to eliminate potential false negative tests.

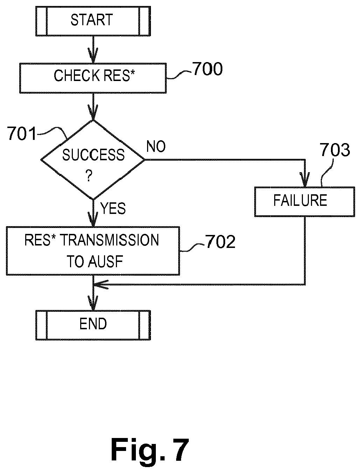

**Figure 7** is a flowchart providing an example of processing performed by an Access and Mobility management Function AMF server.

Once RES* has been received 219 by the AMF 202, it is checked 700 that its hashed value is equal to HXRES*. If 701 successful, RES* is transmitted 702 to the home AUSF 203.

If the AMF detects a failure 703, the bulk authentication attempt is considered as having failed.

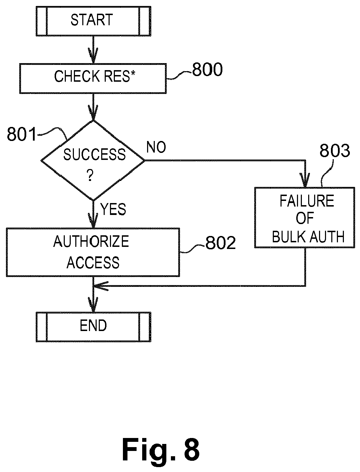

**Figure 8** is a flowchart providing an example of processing performed by the home authentication server AUSF.

Upon reception of RES*, the AUSF checks 800 that it is equal to XRES*. If this verification is successful, the N+1 requesting wireless communication devices of the ordered IMSI list are considered as correctly authenticated and the access to the network is authorized for these devices.

If the home AUSF detect an authentication failure, the bulk authentication attempt is considered as having failed 803.

It is to be noted that the devices of the group are called requesting wireless communication devices. The word "requested" has been used for exemplary purpose. Indeed, the authentication of the wireless communication devices can be triggered by the mobile network.

As successive authentications for the same devices can be carried out, the level of confidence of a wireless communication device will advantageously increase with the number of successful authentications. This is due to the fact that for each authentication attempt of a given wireless communication device, possibly different combinations of bits are extracted from the XRES_i as a different RAND value is used to determine the sampling function.

The use of the synthetic AUTHENTICATE commands allow Non-operational network radio resources usage and to reduce battery consumption while enabling a secure mutual authentication between the network and the requesting wireless communication devices.

## Claims

1. A gateway relaying node (201) for the authentication a group (200) comprising a plurality of wireless communication devices localized in the vicinity of said node (201) and requesting access to a wireless communication network (130), the gateway relaying node (201) being adapted to communicate directly with the requesting wireless communication devices and with the wireless communication network, the gateway relaying node (201) being further adapted to:
- receive (214, 215) all or part of a synthetic authentication vector (300) generated by an authentication server (203), the synthetic authentication vector (300) being derived from a set of individual authentication vectors, said set comprising one individual authentication vector per requesting wireless communication device belonging to the group (200), an individual authentication vector being determined using a random number RAND generated for registering the whole group (200) of requesting wireless communication devices, the synthetic authentication vector being derived by sampling each individual authentication vector using a sampling function SFm and by concatenating the sampled version of said individual authentication vector, the sampling function SFm being selected depending on the value of the random number RAND, the random number RAND being also transmitted as a part of the synthetic authentication vector;
- generate (216) a local AUTHENTICATE command for each of the requesting wireless communication devices (200), a local AUTHENTICATE command being composed of the random number RAND and of the bits extracted from the synthetic authentication vector and corresponding to the sampled version of the individual authentication vectors corresponding to the requesting wireless communication devices (200) for which the local AUTHENTICATE command is intended;
- transmit the local AUTHENTICATE commands (217a, 217b, 217c) to each of the requesting wireless communication devices (200).

2. The gateway relaying node (201) according to Claim 1, wherein it is adapted, before receiving the synthetic authentication vector, to:
- receive a registration request for each (210) of the requesting wireless communication device of the group, a registration request comprising an identifier associated to the requesting wireless communication device to which it is associated;
- transmit (211, 212) to the authentication server (203) the received identifiers, said identifiers being used by the authentication server to retrieve a secret (Ki) associated to the requesting wireless communication devices of the group, said secret (Ki) being used as an input to determine the individual authentication vectors.

3. The gateway relaying node (201) according to any of the preceding claims, wherein it is adapted, after having transmitted the local AUTHENTICATION commands (217a, 217b, 217c), to
- receive for each requesting wireless communication device of the group (200) an authentication response comprising a result RES_i determined using a secret accessible from the requesting wireless communication device and from the random number;
- generate a synthetic authentication response RES* by concatenating a sampled version of the results RES_i received from each of the requesting wireless communication devices of the group.

4. The gateway relaying node (201) according to any of the preceding claims being of same type as of the requesting wireless communication devices.

5. The gateway relaying node (201) according to any claims 2 to 4, wherein the identifiers associated to the requested wireless devices are International Mobile Subscriber Identifiers IMSI.

6. The gateway relaying node (201) according to claim 3 and 5, wherein the list of IMSI is by transmitting only the MSIN part in case the MCC and MNC fields are the same for the requesting wireless communication devices of the group.

7. An authentication server (203) adapted to:
- receive a message (212) comprising a list of identifier associated to a group of wireless communication device, the requesting wireless communication device of this group (200) requesting access to a wireless communication network (130), each of the requesting wireless communication device being associated to an identifier of the list;
- provide a random number RAND generated for this access request for the whole group (200);
- generate a set of individual authentication vectors, said set comprising one individual authentication per requesting wireless communication device belonging to the group (200), an individual authentication vector being determined using the random number RAND;
- select a sampling function SFm based on the random number RAND
- generate a synthetic authentication vector by sampling each individual authentication vector using the sampling function SFm and by concatenating the sampled version of said individual authentication vector, the random number RAND being also transmitted as a part of the synthetic authentication vector;
- transmit (214, 215) all or part of the synthetic authentication vector to a gateway relaying node as claimed in claim 1.

8. The authentication server (203) according to claim 7 configured to estimate a level of confidence for each of the requesting wireless communication devices of the group taking into account the increasing number of authentications performed over time for each of them.

9. The authentication server (203) according to any of claims 7 or 8, wherein an individual authentication vector provided for the i-th requesting wireless communication device comprises an authentication token AUTN_i for authenticating the wireless communication network, a sequence number SQN_i and an expected result XRES_i.

10. The authentication server (203) according to claim 9, wherein the synthetic authentication vector is generated by extracting for the i-th requesting wireless communication device at least one bit of AUTN_i, at least one bit of XRES_i and at least one bit of SQN_i for respectively forming AUTN_i**, XRES_i** and SQN_i**, then concatenating the AUTN_i**, XRES_i**, SQN_i** obtained for all the requesting wireless communication devices (200) of the group, then by calculating a hashed value of XRES_i** and adding the random number RAND.

11. The authentication server (203) according to claim 10, wherein the at least one bit extracted from SQN_i to form SQN_i** is the at least one near least significant bits of SQN_i, for allowing the i-th requesting wireless communication device to verify SQN_i while receiving only SQN_i** with the assumption that the most significant bits are correct despite not received.

12. The authentication server (203) according to any of claims 7 to 11, wherein K bits are extracted (404) from XRES_i*, this extraction being done for all the requesting wireless communication devices (200) of the group and concatenated in order to from a control code named GRN_ControlCodes.

13. The authentication server (203) according to claim 12, wherein the control code GRN_ControlCodes is transmitted to the gateway relaying node (201) for enabling it to perform a pre-authentication of the requesting wireless communication devices (200).

14. The authentication server (203) according to any of claims 7 to 13 , wherein the synthetic authentication vector is transmitted entirely to an Access and Mobility management Function AMF (202), which memorizes HXRES* and forwards a part of the synthetic authentication vector to the gateway relay node (201), said part comprising AUTN*, SQN* and RAND.
